# EUROPEAN PATENT SPECIFICATION

(11) **EP 0 549 819 B1**
(45) Date of publication and mention of the grant of the patent: **02.11.1994**
(21) Application number: 91121517.6
(22) Date of filing: 01.01.1992
(51) Int. Cl.: B65G 67/60, B66C 19/00

(54) **Installation for unloading fish of large dimensions, such as tuna, from the holds of a vessel**
Einrichtung zum Entladen von grossen Fischen, wie Thunfischen, aus Schiffen
Appareil pour le déchargement de grands poissons, comme des thons, des navires

(30) Priority: 23.02.1991 IT GE910023
(43) Date of publication of application: 07.07.1993
(73) Proprietor: PALMERA S.p.A., I-07026 Olbia (SS) (IT)
(72) Inventor: Valsecchi, Adolfo, I-16038 Santa Margherita Ligure (GE) (IT); di Giorgi, Vincenzo, I-16125 Genova (IT)
(74) Representative: Porsia, Attilio, Dr.

(56) References cited:
- EP-A- 0 318 264
- FR-A- 397 759
- FR-A- 2 185 189
- FR-A- 2 529 186
- US-A- 3 696 947

## Description

The present invention relates to an installation for unloading fish of large dimensions. such as for example tuna, from the holds of a fishing or transport vessel to a collecting and sorting place located on a landing wharf, for their subsequent transfer to the processing plant.

Until today, for unloading fish of large dimensions from the holds of transport vessels, use has been made of cranes, of the type with tackle for example, which operate according to the conventional intermittent work pattern, in other words: hooking on the load, lifting, transport, unloading, return empty. The jib of the crane, arranged on the deck of the vessel, of the power shears type, is brought into the region of the hatch of the hold of the vessel, the lifting hook is lowered into the hold where a number of workers hook on to it a number of fish, then the load of fish thus hooked on is lifted, transferred into the region of the unloading place, where the load is unhooked, and the arm of the shears can be brought back above the hold in order to allow the hooking on of a new load.

This manner of intermittent working comprises excessively long times for the loading and the transfer of the fish from the hold of the transport vessel to the processing plant.

The main object of the present invention is therefore a continuous-cycle installation which makes it possible to eliminate the disadvantages of conventional intermittent-cycle installations for unloading fish from the holds of transport vessels.

From EP-A-0 318 264 a travelling container crane is known comprising a mobile gantry mounted for sideways movement on fixed ground rails and two parallel spaced-apart beams supported by and extending horizontally from the gantry in a direction perpendicular to the direction of motion of the gantry. A respective mobile troley is supported under each beam on rails fixed to the beam for to-and-fro movement of the trolley along the beam on the beam rails, and a respective hoistable container-lifting device is suspended from each troley.

In US-A-3 696 947 and FR-A-2 185 189 similar cargo-transferring devices are described.

All the above devices are conceived for the handling of large boxes of standard dimensions, which are stowed in layered matrix fashion. The problem of handling such cargos is quite different from the problem of unloading a stowe in which fish of very different dimensions are random loaded.

According to a main feature of the invention, an installation for unloading fish of large dimensions, such as tuna, from the holds of transport vessels is provided comprising a portal-type structure mounted on rails for movements along a landing wharf, an overhead conveyor with rails which is supported by said portal-type structure and projects with one of its ends beyond the landing wharf above the zone of the hold hatch of a transport vessel docked at said wharf, mobile trolleys supported by said rails for to-and-fro movement of the troleys along said rails, lifting winches supported by said trolleys for winding and unwinding lifting cables equiped with hoooks, characterized by: a fish loading station, arranged in the region of the hold hatch of the vessel, for hooking the fish to the hooks of said trolleys by suspending them by the tails; and a fish unloading station comprising means for severing the tails from the bodies of the fish so as to cause the discharge of the bodies of the fish into a first collecting hopper, and the discharge of the severed tails into a second collecting hopper.

Further characteristics and advantages of the installation according to the invention will be made clear in the course of the following detailed description of the same, which is given with reference to the attached drawings, in which:
Figure 1 is a diagrammatic view, with parts in transverse cross-section, of the end of a landing wharf fitted out with the unloading installation according to the invention, at which there is docked a vessel for the transport of tuna.

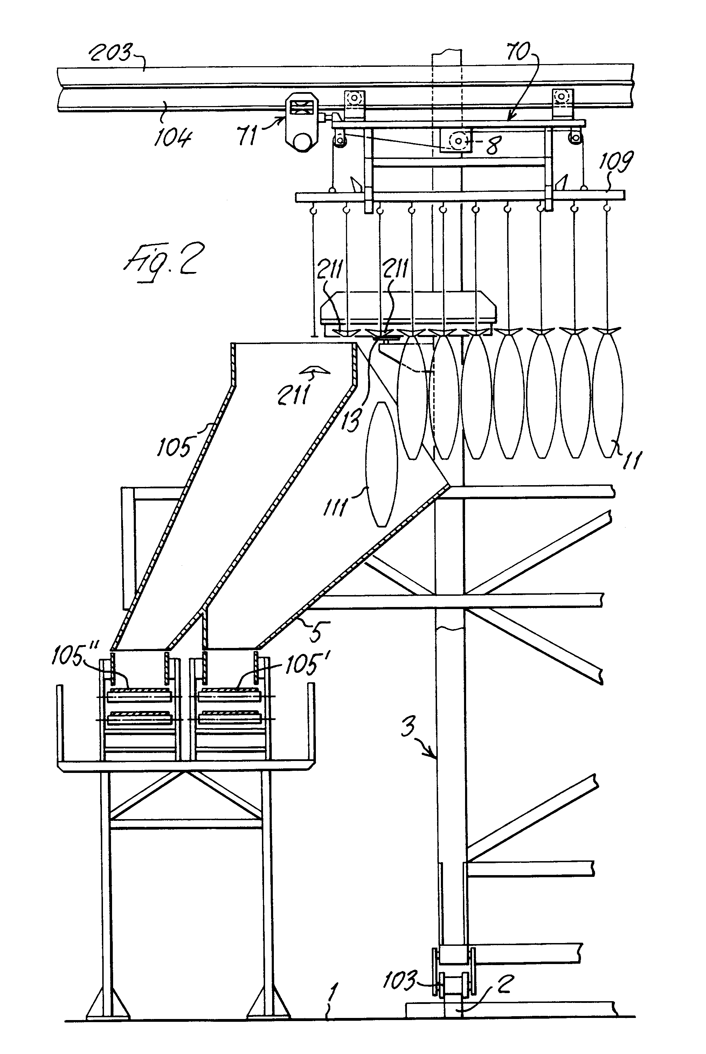

Figure 2 is a detail on an enlarged scale of the tuna unloading station of the unloading installation in Figure 1.
Figure 3 is a front view of the unloading station in Figure 1.
Figure 4 is a lateral view of an automotive trolley with associated rack for hooking on tuna.
Figure 5 is a front view of the trolley in Figure 4.
Figure 6 is a diagrammatic view, similar to that in Figure 1, of the end of a landing wharf fitted out with an unloading installation according to an alternative embodiment of the invention.
Figure 7 is a plan view of the installation in Figure 6, and
Figure 8 illustrates a detail of the trolleys with a winch which are used in the installation according to the embodiment in Figures 6 and 7.

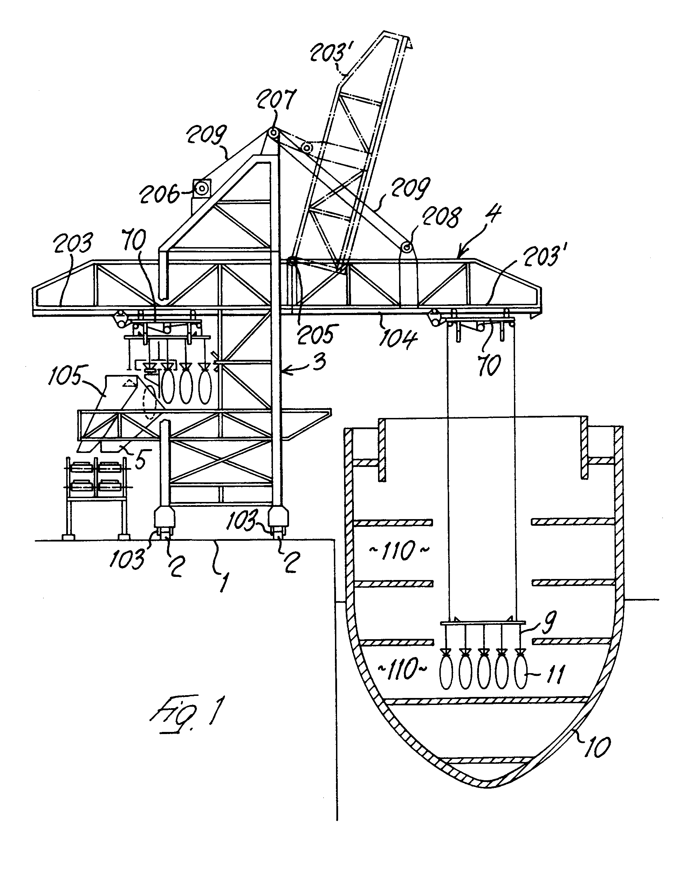

With reference to the drawings, and with particular reference to Figure 1 of the same, 1 indicates the landing wharf. 2 indicates tracks which run along the wharf 1 and on which the self-propelled portal-type structure 3 runs, which is mounted on wheels 103. Said structure 3 supports a framework beam 4, mounted in cantilevered manner, for support of the monorails 104 of the overhead conveyor. Preferably, said beam is made in two sections 203, 203' which are hinged together at 205 and provided with means comprising a winch 206, and pulleys 207 and 208 for returning the cable 209 for lifting the section 203' about the hinge 205 into non-operational position, as is illustrated in dot-dash lines in Figure 1.

The portal-type structure also supports the hoppers 5 and 105 for collection, respectively, of the bodies 11 and of the tails 211 of the fish 11 unloaded from the vessel, as will be described below.

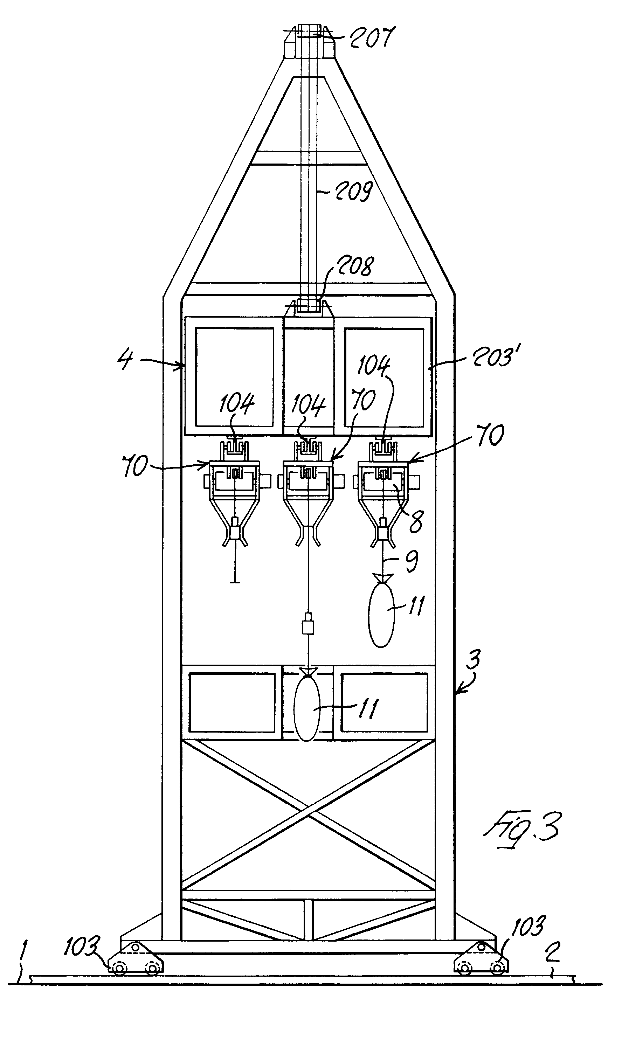

The overhead conveyor 4, as better illustrated in Figure 3, comprises three parallel monorails 104 which extend on a rectilinear path from one end to the other of the beam 203-203'. The trolleys 70 are suspended on said monorails 104.

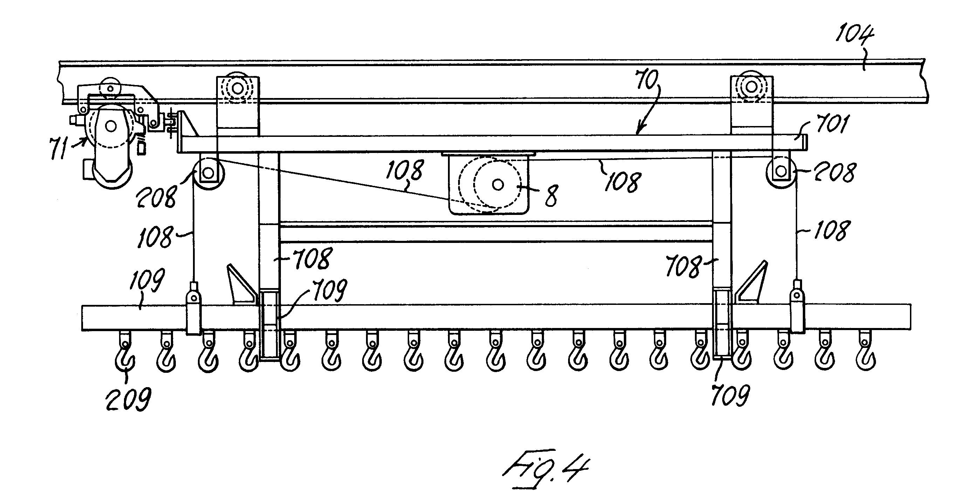

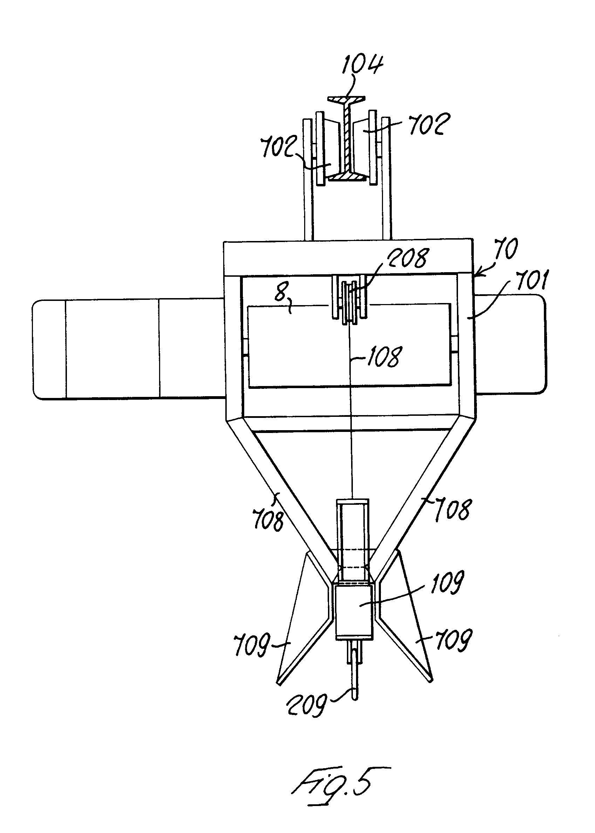

As better illustrated in Figures 4 and 5, the trolleys 70 comprise a frame structure 701 suspended at both ends on the monorail 104 between two pairs of opposite idle wheels 702. Each trolley 70 is in turn connected to a motorised trolley 71. The frame structure 701 accommodates a winch 8, on the drum of which there are wound two cables 108 which are returned on the pulleys 208 arranged at the ends of the frame 701 and at the free ends of which is suspended the rack bar 109 which supports the fixed hooks 209 for hooking on the tuna, as will be described more clearly below. The frame 701 likewise accommodates a battery (not shown) for horizontal movement, as well as all the other electric elements for control and for electric supply of the winch 8. The frame 701 is provided at both ends with two pairs of arms 708 which extend downwards and inwards and are provided at the ends with elements 709 opening out into guide holes, for the centring and locking of the rack bar 109 when it is in its lifted position, for reasons which will be described more clearly below.

10 indicates diagrammatically in transverse cross-section a vessel, in the holds 110 of which the tuna 11 to be unloaded are contained. Said vessel, as illustrated, is docked at the landing wharf 1. Before starting the landing of the tuna 11, the unloading structure 3 is transferred on the rails 2 until in the region of the zone of the hold hatches of the vessel 10. During this phase of transfer, the half-beam 203' has been lifted by means of the winch 206 into the position illustrated in dot-dash lines in Figure 1, while the trolleys 70 are all situated on lengths of monorail 104 of the half-beam 203. Subsequently, the half-beam 203' is lowered by means of the winch 206 into operating position, illustrated in solid lines in Figure 1.

At this moment, the operation of unloading the tuna 11 from the holds 110 of the vessel 10 can start.

To this end, one trolley 70 is advanced, by means of the motive trolley 71, as far as onto the vertical of the hold 110. At this point, the winch 8 comes into action, which lowers the rack bar 109 into the hold 110. The workers present in the hold, who have previously hooked the tails of each tuna to be landed onto one end with a loop of a cable-type holding system 9, hook the other end of said system onto one of the hooks 209 of the bar 109. After all the tuna have been hooked onto the hooks of the bar 109, it is lifted by the winch 8, and brought between the locking elements 709 of the arms 708 of the frame 701, so as to prevent oscillations of the bar 109 during transport and the subsequent operations. At this point, the trolley 70 with the load of tuna suspended on the hooks of the bar 109 starts its movement towards the opposite end of the beam 203-203', in other words towards the tuna unloading station, while a second trolley 70 is brought onto the vertical of the hatch.

In the region of the unloading station, in the zone of the mouth of the hopper 5, on the frame 3, a horizontal blade with a rotating disc 13 is mounted, which is arranged in a plane at the level of the zone of joining of the tail 211 of the tuna 11 to the body 111 of said tuna, as a result of which, when a tuna suspended on the trolley 70 moves into the region of the blade 13, the latter separates the body 111 from the tail 211. The body 111 therefore falls into the hopper 5 and from this onto a conveyor 105' which takes care of its sorting, while the tail 211 is transported a short way further by the trolley 70 to be unloaded then by gravity into the hopper 105, from which it passes to the conveyor 105'' which takes care of its transport to the unloading zone.

In order to prevent the tail 211 falling prematurely after its cutting, it is possible to provide suitable guide means (not shown).

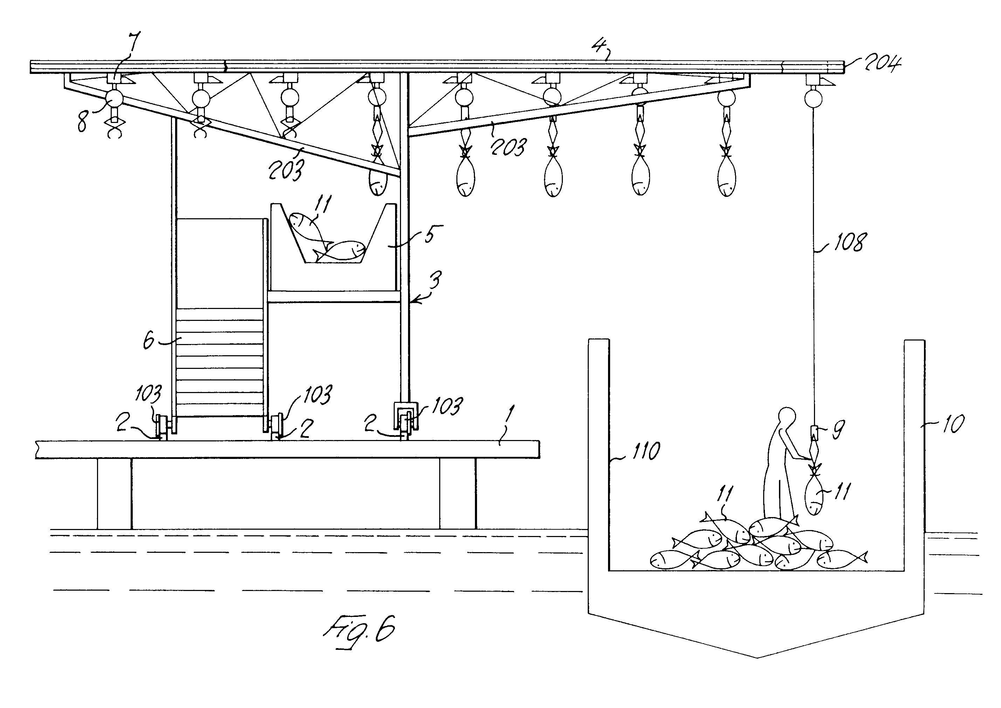

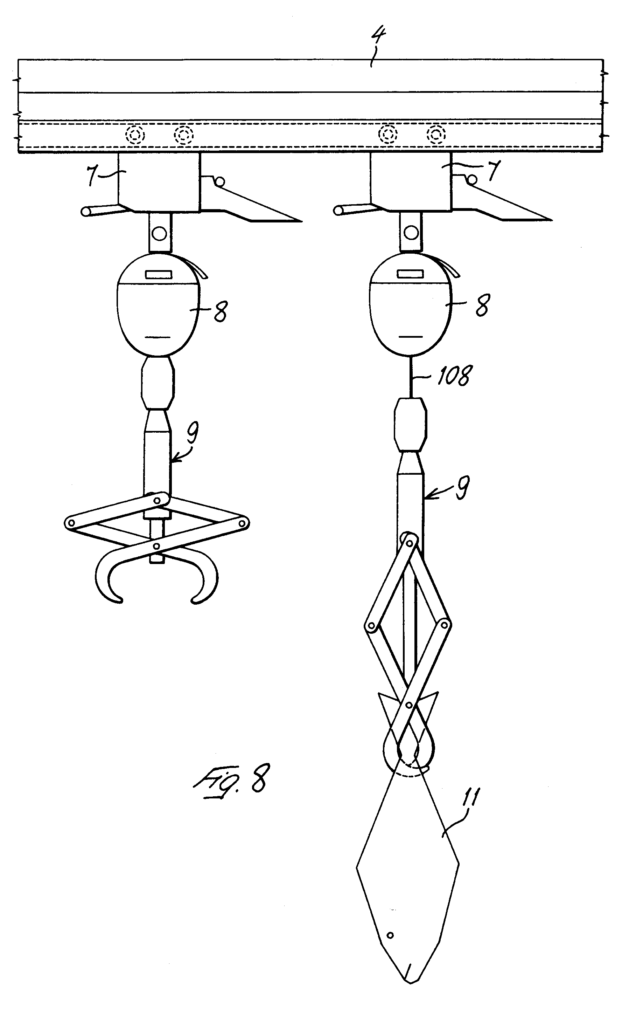

With reference to Figures 6 to 8, a description will now be given of a second embodiment of the invention.

With particular reference firstly to Figures 6 and 7, 1 indicates the landing wharf. 2 indicates the tracks which run along the wharf 1 and on which the portal-type structure 3 runs, which is mounted on the wheels 103. Said structure 3 comprises a framework structure 203 for supporting the overhead conveyor 4. The portal-type structure 3 also supports a hopper 5 for collecion of the fish unloaded from the vessel. The structure 3 is equipped with a stairway 6 for access to a control platform 106.

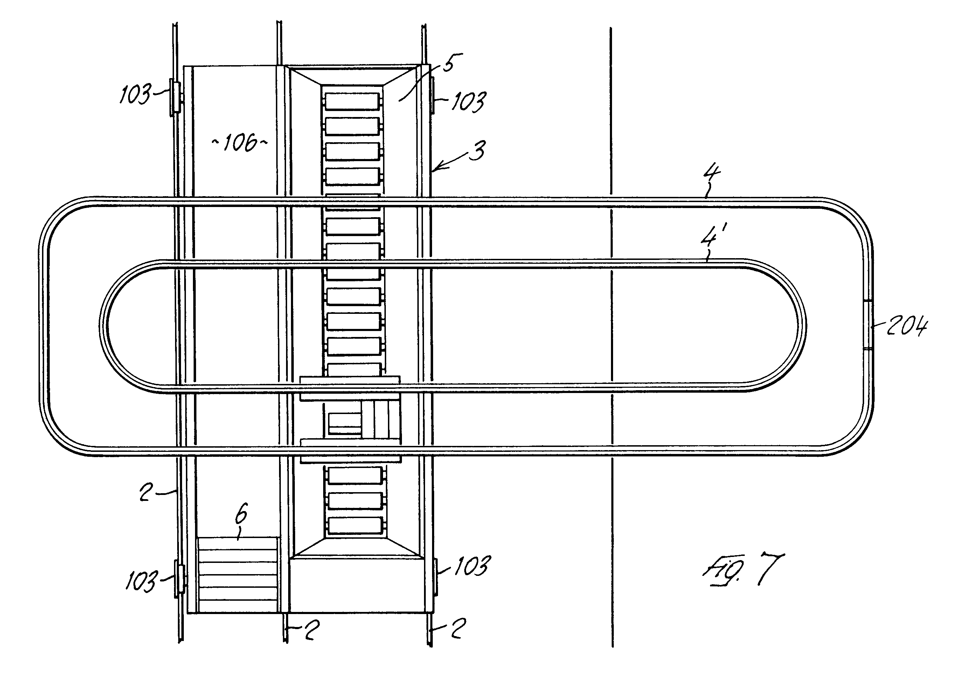

The overhead conveyor, as illustrated more clearly in plan view in Figure 7, comprises the monorail 4 which extends over an annular path and on which the trolleys 7 are suspended, which in turn support the winches 8, on the cables 108 of which the grippers 9 are suspended. Each trolley 7 is equipped with an electric actuating motor. They could, however, also be actuated by means of a drive chain, actuated by a suitable motor, to which all the individual trolleys 7 are connected. The winches 8 are equipped with an electric motor. It is possible to provide means (not shown) for adjusting the projection of the overhead conveyor 4 in the transverse direction.

10 indicates diagrammatically in transverse cross-section a vessel, in the holds 110 of which the tuna 11 to be unloaded are contained. Said vessel, as illustrated, is docked at the landing wharf 1. Before starting the landing of the tuna 11, the unloading structure 3 is transferred on the rails 2 until in the region of the zone of the hold hatches of the vessel 10, and at the same time the end of the monorail 4 projecting to the sea is adjusted so as to bring it onto the perpendicular to the hatch holds of the vessel 10.

At this moment, the operation of unloading the tuna 11 from the hold 110 of the vessel 10 can start.

To this end, the carousel of the trolleys 7 is set in motion, after having adjusted, for example by means of a suitable electronic command brought under the control of a probe (not shown) which is lowered into the hold of the vessel, the unwinding length of the piece of cable 108 from the winch 8, according to the distance between the winch 8 and the relevant level of the hold 110. The carousel of trolleys 7 advances continuously. The monorail 4 is electrically insulated in the length of rail 204 arranged on the perpendicular of the hold 110. When a trolley 7 approaches the start of said length 204, a command is transmitted, for example by means of a photocell (not shown) to the winch 8, for unwinding the length of cable 108 predetermined by said probe. Subsequently, when the trolley 7 enters the insulated length 204 of rail, it stops.

A worker 12 is present in the hold 110, who hooks the tail of a tuna 11 onto the hook 9, at the same time bringing about the closure of said hook, after which he accompanies the trolley 7, by means of the cable 108, out of the insulated zone 204, so that the trolley restarts its own movement. At the same time, the rewinding of the cable 108 is brought about, with simultaneous lifting of the fish 11 hooked on the hook 9. When a fish 11 reaches the region of the unloading hopper 5, a fixed pawl (not shown) brings about the opening of the hook 9, as a result of which the fish 11 is made to fall into the hopper 5, and the trolley 7 restarts its own operating cycle for the hooking on of a new fish.

The fish unloaded into the hopper 5 can be conveyed from this to the processing plant by any suitable means, and for example by means of a chute connected to the hopper 5, or by unloading them from the hopper 5 onto a suitable means of transport, such as for example a lorry, or by loading the hopper 5 itself onto a motorised truck.

## Claims

1. Installation for unloading fish of large dimensions, such as tuna (11), from the holds (110) of transport vessels (10), comprising a portal-type structure (3) mounted on rails (2) for movements along a landing wharf (1), an overhead conveyor (4) with rails (104) which is supported by said portal-type structure (3) and projects with one of its ends beyond the landing wharf (1) above the zone of the hold hatch of a transport vessel (10) docked at said wharf (1), mobile trolleys (70) supported by said rails (104) for to-and-fro movement of the troleys (70) along said rails, lifting winches (8) supported by said trolleys (70) for winding and unwinding lifting cables (108) equiped with hooks (209), characterized by: a fish loading station arranged in the region of the hold hatch (110) of the vessel (10), for hooking the fish (11) to the hooks (209) of said trolleys (70) by suspending them by the tails (211); and a fish unloading station comprising means (13) for severing the tails (211) from the bodies (111) of the fish (11) so as to cause the discharge of the bodies (111) of the fish into a first collecting hopper (5), and the discharge of the severed tails (211) into a second collecting hopper (105).

2. Installation according to Claim 1, characterised in that beams (109) equiped with a plurality of lifting hooks (209) are suspended on the cables (108) of said lifting winches (8) supported by each trolley (70).

3. Installation according to Claim 1 or 2, characterised in that the said means (13) for severing the tails (211) of the fish (11) from the bodies (111) are in the form of rotating cutting blades.

4. Installation according to Claim 1, characterized in that said overhead conveyor (4) is supported by a framework structure (203, 203') projecting in a cantilever manner beyond said portal-type structure (3).

5. Installation according to Claim 4, characterized in that said framework structure is made in two sections (203, 203') one of these sections (203') constituting the part projecting in a cantilevered manner, said part (203') being hinged by means of a hinge joint (205) to the part (203), there being provided means (206, 207, 208, 209) for lifting said projecting part (203') from its horizontal operating position into a sub-vertical position or for lowering said part from said sub-vertical position to the horizontal operating position, by making it rotate about said hinge (205).

6. Installation according to the preceding Claims, in which said means of advance of said trolleys (70) comprise a motorized buggy (71) coupled to said trolleys (70).

7. Installation according to claim 3, in which said cutting blade (13) is mounted in the region of the fish unloading station at a level such as to cut the fish which move in front of it in the region of the zone of connection of the tail (211) of the fish (11) to the body (111) of said fish.

8. Installation according to the preceding Claims, in which said overhead conveyor (4) comprises at least two and preferably three monorails (104) for guiding and running said troleys (70).

9. Installation according to claim 1, in which said collecting hopper (5) is connected to a chute (105') for conveying the fish to a processing plant, or to a transport motor vehicle.

## Patentansprüche

1. Einrichtung zum Entladen von Fischen großer Abmessungen, solche wie Thunfische (11), aus den Laderäumen (110) von Kühlschiffen (10), enthaltend eine portalähnliche Struktur (3), die auf Schienen (2) für Bewegungen entlang einer Landungsbrücke (1) montiert ist, ein über Kopf angeordnetes Fördermittel (4) mit Schienen (104), welches von der besagten portalähnlichen Struktur (3) getragen wird und mit einem seiner Enden über die Landungsbrücke (1) hinaus ragt, über die Zone der Ladeluke des Laderaums des an der besagten Landungsbrücke (1) angedockten Kühlschiffes (10), mobile Laufkatzen (70), getragen von besagten Schienen (104) für Hin- und Herbewegungen der Laufkatzen (70) entlang der besagten Schienen, Hebewinden (8) getragen von besagten Laufkatzen (70) zum Auf- und Abwickeln von mit Haken (209) ausgerüsteten Hebekabeln (108),
**gekennzeichnet durch:**
eine in der Region der Ladeluke des Laderaumes (110) des Kühlschiffes (10) angeordnete Fischladestation, zum Anhängen der Fische (11) an die Haken (209) der besagten Laufkatzen (70) durch Aufhängen an ihren Schwänzen (211); und eine Fischentladestation enthaltend Mittel (13) zum Abtrennen der Schwänze (211) von den Körpern (111) der Fische (11) dergestalt, daß das Entladen der Körper (111) in einen ersten Sammeltrichter (5) und das Entladen der abgetrennten Schwänze (211) in einen zweiten Sammeltrichter (105) erfolgt.

2. Einrichtung gemäß Anspruch 1, **dadurch gekennzeichnet, daß** Balken (109), ausgerüstet mit einer Mehrzahl von Hebehaken (209) an den Kabeln (108) der besagten Hebewinden (8) aufgehängt sind, die durch jede Laufkatze (70) getragen sind.

3. Einrichtung gemäß Anspruch 1 oder 2, **dadurch gekennzeichnet, daß** die besagten Mittel (13) zum Abtrennen der Schwänze (211) der Fische (11) von den Körpern (111) die Form von rotierenden Schneideblättern aufweisen.

4. Einrichtung gemäß Anspruch 2, **dadurch gekennzeichnet, daß** das besagte über Kopf angeordnete Fördermittel (4) von einer rahmenförmigen Struktur (203, 203') getragen ist, die in einer auslegerartigen Weise über die besagte portalartige Struktur (3) vorspringt.

5. Einrichtung entsprechend Anspruch 4, **dadurch gekennzeichnet, daß** die besagte rahmenförmige Struktur aus zwei Bereichen (203, 203') besteht, von denen ein Bereich (203') den Teil darstellt, der auslegerartig hervorsteht, besagter Teil (203) schwenkbar mittels einer Gelenkverbindung (205) zu dem Teil (203) ist, dort mit Mitteln (206, 207, 208, 209) zum Anheben des besagten überstehenden Teils (203') von seiner horizontalen Arbeitsstellung in eine vertikal darunterliegende Position oder für das Absenken besagten Teils von besagter vertikal darunterliegender Position zu einer horizontalen Arbeitsstellung durch Rotieren um besagtes Drehgelenk (205) ausgerüstet ist.

6. Einrichtung entsprechend der vorstehenden Ansprüche, in denen besagte Mittel zur Bewegung der besagten Laufkatzen (70) einen motorisierten Buggy (71) aufweisen, der mit den besagten Laufkatzen (70) verbunden ist.

7. Einrichtung entsprechend Anspruch 3, in dem besagtes Schneideblatt (13) derart in dem Bereich der Fischentladestation auf einer solchen Höhe angebracht ist, daß die Fische, die sich vor ihrer Vorderseite her bewegen, in einer Region zerschnitten werden, die in der Zone der Verbindung zwischen Schwanz (211) des Fisches (11) und dem Körper (111) des besagten Fisches liegt.

8. Einrichtung gemäß einem der vorstehenden Ansprüche, in dem das besagte über Kopf angeordnete Fördermittel (4) mindestens zwei und vorzugsweise drei Einzelschienen (104) zum Führen und zum Bewegen der besagten Laufkatzen (70) enthält.

9. Einrichtung entsprechend Anspruch 1, in der der besagte Sammeltrichter (5) mit einer Rutsche (105) zum Fördern der Fische in eine Verarbeitungsfabrik oder zu einem motorisierten Transportfahrzeug ausgerüstet ist.

## Revendications

1. Installation pour décharger des poissons de grande taille, tels que des thons (11) des cales (110) de bateaux de transport (10), comprenant une structure de type portique (3) montée sur des rails (2) pour se déplacer le long d'un quai d'accostage (1), un convoyeur aérien (4) équipé de rails (104), qui est supporté par la structure de type portique (3) et dont l'une des extrémités s'étend au-delà du quai d'accostage (1) au-dessus de la zone de l'écoutille d'un bateau de transport (10) accosté au quai (1), des chariots mobiles (70) supportés par les rails (104) pour que les chariots (70) puissent effectuer un mouvement de va-et-vient le long des rails, des treuils de levage (8) supportés par les chariots (70) pour enrouler et dérouler des câbles de levage (108) équipés de crochets (209), caractérisée par : un poste de chargement de poisson placé dans la région de l'écoutille (110) du bateau (10), pour accrocher les poissons (11) aux crochets (209) des chariots (70), en les suspendant par les queues (211); et un poste de déchargement de poisson comprenant des moyens (13) pour couper les queues (211) pour les séparer des corps (111) des poissons (11), de façon à évacuer les corps (111) des poissons dans une première trémie de collecte (5), et à évacuer les queues coupées (211) dans une seconde trémie de collecte (105).

2. Installation selon la revendication 1, caractérisée en ce que des poutres (109) équipées d'un ensemble de crochets de levage (209) sont suspendues aux câbles (108) des treuils de levage (8) supportés par chaque chariot (70).

3. Installation selon la revendication 1, caractérisée en ce que les moyens (13) destinés à couper les queues (211) des poissons (11) pour les séparer des corps (111) se présentent sous la forme de lames coupantes tournantes.

4. Installation selon la revendication 1, caractérisée en ce que le convoyeur aérien (4) est supporté par une structure en treillis (203, 203') qui s'étend en porte-à-faux au-delà de la structure de type portique (3).

5. Installation selon la revendication 4, caractérisée en ce que la structure en treillis est constituée par deux sections (203, 203'), l'une de ces sections (203') constituant la partie qui s'étend en porte-à-faux, cette section (203') étant articulée sur l'autre partie (203) au moyen d'un joint articulé (205), et des moyens (206, 207, 208, 209) sont incorporés pour lever la section en porte-à-faux (203') pour la faire passer de sa position de fonctionnement horizontale à une position proche de la verticale, ou pour abaisser cette section depuis la position proche de la verticale jusqu'à la position de fonctionnement horizontale, en la faisant tourner autour de la jonction articulée (205).

6. Installation selon les revendications précédentes, dans laquelle les moyens de déplacement des chariots (70) comprennent une structure mobile à moteur (71) qui est accouplée aux chariots (70).

7. Installation selon la revendication 3, dans laquelle la lame coupante (13) est montée dans la région du poste de déchargement de poisson, à un niveau tel qu'elle coupe le poisson qui passe devant elle dans la région de la jonction entre la queue (211) du poisson (11) et le corps (111) du poisson.

8. Installation selon les revendications précédentes, dans laquelle le convoyeur aérien (4) comprend au moins deux monorails (104), et de préférence trois, pour guider et faire rouler les chariots (70).

9. Installation selon la revendication 1, dans laquelle la trémie de collecte (5) est raccordée à un convoyeur (105') qui est destinée à transporter le poisson vers une usine de conditionnement ou vers un véhicule à moteur pour le transport.
